# EUROPÄISCHE PATENTSCHRIFT

(11) **EP 1 038 899 B1**
(45) Veröffentlichungstag und Bekanntmachung des Hinweises auf die Patenterteilung: **18.12.2002**
(21) Anmeldenummer: 00105915.3
(22) Anmeldetag: 22.03.2000
(51) Int. Cl.: C08G 18/70, C08J 5/06, C09J 175/00

(54) **Verwendung von Haftvermittlern für textile Verstärkungseinlagen**
Use of adhesion promoters for textile reinforcements
Utilisation de promoteurs d'adhérence pour structures de renforcement textiles

(30) Priorität: 23.03.1999 DE 19913042
(43) Veröffentlichungstag der Anmeldung: 27.09.2000
(73) Patentinhaber: EMS-Chemie AG, 7013 Domat/Ems (CH)
(72) Erfinder: Kurz, Guenter, 7015 Tamins (CH)
(74) Vertreter: Pfenning, Meinig & Partner GbR

(56) Entgegenhaltungen:
- EP-A- 0 137 427
- EP-A- 0 739 961
- EP-A- 0 835 891
- WO-A-94/22935
- US-A- 4 569 963

## Beschreibung

Die Erfindung betrifft die Verwendung eines Haftvermittlers für die Behandlung von textilen Verstärkungseinlagen zur Herstellung von textilverstärkten Gummiprodukten, insbesondere für Reifencord der in Form einer wäßrigen Dispersion mit einem Festkörperanteil von geblocktem Isocyanat von 55-85 Gew.-% vorliegt.

Bei der Herstellung von faserverstärkten Gummiprodukten hat es sich als vorteilhaft erwiesen, wenn zur Verbesserung der Haftfestigkeit zwischen textiler Verstärkungseinlage und dem Kautschuk ein Haftvermittler eingesetzt wird. Wichtig ist der Einsatz eines derartigen Haftvermittlers, insbesondere im Bereich von Reifencord und anderen hochbelasteten Verbundwerkstoffen mit Verstärkungsfasern. Insbesondere für diese Anwendungsgebiete ist es aus dem Stand der Technik bekannt, Resorcin-Formaldehyd-Latexsysteme (RFL) zur Verbindung von synthetischen Fasern zu Gummiprodukten einzusetzen. Verfahrensmäßig kann dabei entweder in einem Ein-Schritt oder in einem Zwei-Schrittverfahren vorgegangen werden. Beim Ein-Schrittverfahren wird eine Imprägnierung des Verstärkungselementes mit einer Mischung aus RFL und einem Haftvermittler durchgeführt.

Beim Zwei-Schrittverfahren wird zuerst eine Imprägnierung des Verstärkungselementes mit dem Haftvermittler vorgenommen und dann in einem zweiten Schritt die Applikation von RFL vorgenommen.

Aus dem Stand der Technik sind für derartige Verfahren auch schon speziell abgestimmte Haftvermittler bekannt. Diese Systeme basieren auf einer speziellen Formulierung einer wäßrigen Dispersion von geblockten Isocyanaten in Kombination mit RFL. In einem Übersichtsartikel aus "Rubber Chemistry and TechnolcDgy" Vol. 58, Seite 383 bis Seite 391 sind die entsprechenden Haftvermittlungssysteme und die Verfahren zum Herstellen von faserverstärkten Gummiprodukten beschrieben. Ein spezielles Haftvermittlungssysstem ist in der US 4,477,619 offenbart.

Aus "Tire Technology,International11 1994, Seite ... bis ... ist ein Haftvermittlungssystem bekannt, das unter dem Namen Grillbond IL-60® von der Firma EMS-Chemie AG in der Schweiz vertrieben wird. Dieses System besteht aus einer wäßrigen Dispersion, die einen 50 %igen Feststoffanteil eines geblockten Isocyanats enthält. Dieses System hat insbesondere gegenüber den ebenfalls aus dem Stand der Technik bekannten Pulvern den Vorteil, daß die wäßrige Dispersion lagerstabil und sofort anwendbar ist.

Dadurch ist eine einfache Handhabung und eine ökonomische Verfahrensführung möglich. Gleichzeitig hat es sich gezeigt, daß dadurch keine Agglomeration oder Sedimentation von Feststoffen auftritt wie dies offensichtlich bei der Zubereitung von Pulvern mit Wasser der Fall ist.

Nachteilig bei der vorstehend beschriebenen wäßrigen Dispersion Grillbond® ist jedoch, daß der Feststoffanteil relativ niedrig ist und daß damit große Einsatzmengen notwendig sind, um eine vollständige Imprägnierung der Faser zu gewährleisten.

Aus der WO 95/22 935 ist eine wäßrige Emulsion bekannt, die maskiertes Polyisocyanat mit einer Partikelgröße von 0,5-5 µm enthält.

Die EP 0 739 961 A1 beschreibt eine Dispersion mit einem Partikeldurchmesser von 0,001-1 µm zur Herstellung von Überzügen.

Über die spezifische Verwendung dieser Emulsion bzw. Dispersion ist nichts enthalten.

Ausgehend hiervon ist es deshalb die Aufgabe der vorliegenden Erfindung, einen verbesserten Haftvermittler vorzuschlagen, der für die spezifische Anwendung für die Behandlung von verstärkten Polymerprodukten Vorteile aufweist.

Die Aufgabe wird durch die kennzeichnenden Merkmale des Patentanspruches 1 gelöst. Die Unteransprüche zeigen vorteilhafte Weiterbildungen auf.

Die Anmelderin konnte überraschenderweise zeigen, daß es möglich ist, eine wäßrige Dispersion mit einem Festkörperanteil von 55 bis zu 85 % zu erhalten, wenn die durchschnittliche Partikelgröße der Festkörper < 2,0 µm beträgt als Haftvermittler einzusetzen. Von der Anmelderin durchgeführte Versuche haben gezeigt, daß bei den wäßrigen Dispersionen des Standes der Technik durchschnittliche Partikeldurchmesser von über 3 µm vorliegen. Der Vorteil der eingesetzten Dispersion ist darin zu sehen, daß der mittlere Durchmesser der Feststoffpartikel deutlich unter den des bisherigen Standes der Technik liegt, so daß es möglich ist, den Feststoffanteil auf bis zu 85 % zu erhöhen ohne daß Agglomerationen oder sonstige Störungen auftreten. Der wesentliche Vorteil ist, daß nun mit geringeren Mengen und damit verfahrensäkonomischer gearbeitet werden kann. Es hat sich auch gezeigt, daß die wäßrige Dispersion aufgrund ihres einheitlicheren Korndurchmessers eine vollständige Imprägnierung der Verstärkungselemente ermöglicht. Dadurch können textilfaserverstärkte Gummiprodukte hergestellt werden, die in ihren technischen Daten d.h. insbesondere in der Haftbeständigkeit gegenüber dem Stand der Technik deutlich verbessert sind.

Besonders bevorzugt ist es bei der wäßrigen Dispersion, wenn der mittlere Korndurchmesser < 1,50 µm, besonders bevorzugt < 1,35 µm ist.

Durch Versuche, die von der Anmelderin durchgeführt wurden, konnte festgestellt werden, daß 80 % der Festkörperpartikel einen Durchmesser von 0,01-5 µm aufweist. Bevorzugt ist es aber wenn der Durchmesser zwischen 0,5 und 5 µm liegt. Dies zeigt, daß bei der verwendeten wäßrigen Dispersion eine einheitlichere Korngrößenverteilung und kleinere Korngrößen vorliegen, wie dies beim Stand der Technik der Fall war. Die Korngrößenverteilung variiert nur in sehr engen Grenzen. Die verwendete Dispersion enthält demnach den Festkörper in Form einer Fein- bzw. Feinstmahlung.

Aus stofflicher Sicht umfaßt die Erfindung bei den Haftvermittlern dabei Isocyanate und die entsprechenden Reaktionsprodukte aus den Isocyanaten mit sich selbst zu dimeren oder oligomeren Produkten und solche mit Blockierungsmitteln zu teilweise oder ganz blockierten Isocyanaten ein. Generell sind alle kommerziell erhältlichen aromatischen Isocyanate sowie aliphatischen und cycloaliphatischen Isocyanate einsetzbar. Spezielle Beispiele sind:

4,4- und/oder 2, 4-diphenyl-methan-diisocyanat (MIDI), rohes und gereinigtes Polymeres MDI (PMDI), sowie alle anderen MDI-Isomere wie: 3,4-MDI, 2,2-MDI und/oder 2,3-MDI. 2,4-und/oder 2,9-Toluol-Diisocyanat und deren Oligomere, insbesondere dimerisiertes 2,4-Toluol-Diisocyanat. 1-Isocyanato-3-Isocyanatomethyl-3,5,5-Trimethylcyclohexan (Isophoron-Diisocyanat oder IPDI). Hexamethvlen-Diisocyanat (HDI). Polyisoncyanate in der Form von Polyisocyanat-Addukte. Z.B. Polyisocyanate enthaltende Gruppen aus Isocyanurate, Uretdione, Biuret, Urethane, Allophanate, Carbodiimide und/oder Oxadiazine.

Beispiel für Blockierungsmittel sind:

Monophenole, z.B. Phenol, Resorcin, Kresol, Trimehtylphenole, tert. Butylphenole. Lactame, z.B. e-Caprolactam, d-Valerolactam. Oxime, z.B. Methyl-Ethyl-Ketoxim (Butanon-Oxim), Methyl-Amyl-Ketoxim und Cyclohexanon-Oxim. Primäre, sekundäre und tertiäre Alkohle, Glykolether, leicht enol-bildende Verbindungen wie z.B. Acetoessigester, Acetylaceton, Malonsäurederivate. Sekundäre aromatische Amine. Imide, Merkaptane, Triazole.

Als Additive können Netzmittel und/oder Dispergiermittel eingesetzt werden.

Der verwendete Haftvermittler ist besonders geeignet für textile Verstärkungseinlagen z.B. aus Polyester, Polyethylen, Polyamid oder Ryan. Diese so behandelten Verstärkungseinlagen werden insbesondere zur Herstellung von Reifencord, Transportband, Keilriemen, mechanischen Gummiteile sowie Komposits eingesetzt.

Die Herstellung des Haftvermittlers erfolgt dabei in einem zweistufigen Prozeß. Es wird dabei so vorgegangen, daß in einem ersten Schritt eine Vordispersion des Haftvermittlers mit Wasser in Form einer wäßrigen Dispersion mit z.B. 50 % Festkörpergehalt hergestellt wird. Im weiteren Verlauf wird dann diese Vordispersion so lange einer Naßmahlung unterzogen, bis das gesamte Mahlgut wasserdünn ist und eine Viskosität von 5-150 µ, bevorzugt 5-90 µm aufweist. Dieses so hergestellte wasserdünne Mahlgut erlaubt nun die erforderliche weitere Zugabe von Festkörpern, bis der gewünschte Festkörpergehalt von 55-85 Gew.-% erreicht ist. Die Naßmahlung wird dabei bevorzugt mit einer Rührwerkskugelmühle durchgeführt.

Erforderlichenfalls kann auch, wenn ein bestimmter Festkörpergehalt z.B. von 70 % eingestellt worden ist durch weitere Zugabe von Wasser wieder eine Verdünnung z.B. auf 60 % hergestellt werden, sollte dies aus bestimmten Gründen zur Herstellung von ganz bestimmten ausgewählten Gummiprodukten notwendig sein.

Überraschenderweise hat es sich gezeigt, daß das wie vorstehend beschrieben hergestellte Haftvermittlungssystem eine ausgezeichnete Lagerstabilität von mindestens einem Jahr besitzt. Überraschend war hierbei insbesondere, daß bei der erfindungsgemäßen Haftvermittlungszusammensetzung keine Zugabe eines Verdikkungsmittels, wie dies bei den aus dem Stand der Technik bekannten erforderlich ist, notwendig war. Das Absetzverhalten war dabei sogar ohne zusätzliches Verdickungsmittel besser als bei den aus dem Stand der Technik bekannten Formulierungen.

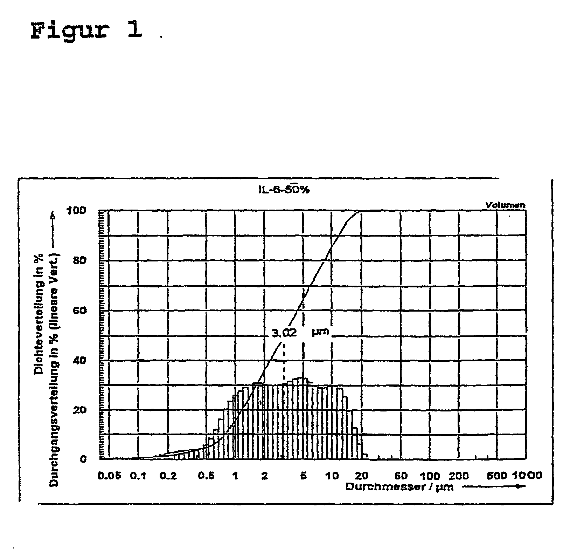

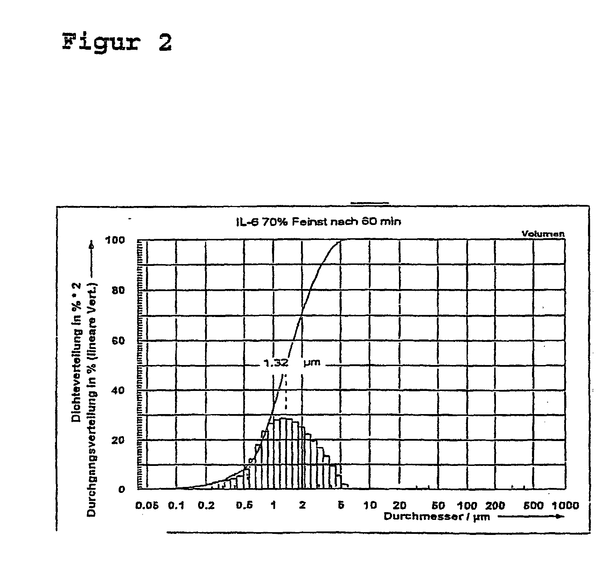

Nachfolgend wird die Erfindung anhand der Figuren 1 und 2 näher erläutert.

Fig. 1 zeigt hierbei die Korngrößenverteilung einer wäßrigen Dispersion IL-6 mit einem 50 %igen Festkörperanteil.

Fig. 2 zeigt die Korngrößenverteilung einer 70 %igen Lösung mit einer Feinstmahlung.

Fig. 1 zeigt die Korngrößenverteilung einer Haftvermittlerdispersion wie sie bisher im Stand der Technik bekannt war. Diese Haftvermittlerdispersion weist, wie aus der Korngrößenverteilung hervorgeht, eine sehr breite Größenverteilung auf. Die einzelnen Korngrößen der Haftvermittler schwanken im Bereich von 0,1-20 µm. Der durchschnittliche Partikeldurchmesser der Festkörper liegt dabei bei 3,02 µm.

Fig. 2 zeigt nun die gleichen Meßergebnisse bei einem erfindungsgemäßen Hafftvermittler. Die Korngrößenverteilung schwankt hierbei im wesentlichen zwischen 0,1 und 5 µm. 80 % der Festkörper weisen dabei einen Durchmesser von 0,5-5 µm auf. Der durchschnittliche Partikeldurchmesser der Festkörper beträgt danach 1,32 µm. Insbesondere diese ausgewählten Partikeldurchmesser erlauben es nun, da ein so hoch konzentrierter Haftvermittler wie erfindungsgemäß beschrieben, realisiert werden kann. Für einen Fachmann war es dabei völlig überraschend und nicht zu erwarten, daß dieser Haftvermittler eine ausgezeichnete Lagerstabilität aufweist und dabei noch eine Haftbeständigkeit hat, die gegenüber dem Stand der Technik deutlich verbessert ist.

## Patentansprüche

1. Verwendung einer wäßrigen Dispersion als Haftvermittler für die Behandlung von Verstärkungseinlagen zur Herstellung von verstärkten Polymerprodukten enthaltend
Isocyanat, teilweise oder vollständig blockiertes Isocyanat als Haftvermittler als Festkörper und Additive,
wobei die wäßrige Dispersion einen Festkörperanteil von 55-85 Gew.-% aufweist mit der Maßgabe, daß der durchschnittliche Partikeldurchmesser der Festkörper < 2,0 µm ist.

2. Verwendung nach Anspruch 1, **dadurch gekennzeichnet, daß** der durchschnittliche Partikeldurchmesser < 1,50 µm ist.

3. Verwendung nach Anspruch 1 oder 2, **dadurch gekennzeichnet, daß** 80 % der Festkörper einen Teilchendurchmesser von 0,01-5 µm, bevorzugt 0,5-5 µm aufweisen.

4. Verwendung nach mindestens einem der Ansprüche 1 bis 3, **dadurch gekennzeichnet, daß** der Festkörperanteil 65-75 Gew.-% beträgt.

5. Verwendung der Dispersion nach mindestens einem der Ansprüche 1 bis 4, **dadurch gekennzeichnet, daß** sie für Gummiprodukte verwendet wird.

6. Verwendung der Dispersion nach mindestens einem der Ansprüche 1 bis 5, **dadurch gekennzeichnet, daß** sie für textile Verstärkungseinlagen verwendet wird.

7. Verwendung nach Anspruch 6, **dadurch gekennzeichnet, daß** die Verstärkungseinlagen aus Polyester, Polyethylen, Polyamid oder Ryan sind.

8. Verwendung nach mindestens einem der Ansprüche 1 bis 7, **dadurch gekennzeichnet, daß** die Dispersion als Additive Netzmittel und/oder Dispergiermittel enthält.

## Claims

1. Use of an aqueous dispersion as an adhesion promoter for treating reinforcing plies to produce reinforced polymer products, containing isocyanate, partially or completely blocked isocyanate as an adhesion promoter as solids and additives,
wherein the aqueous dispersion has a solids content of 55-85% by weight, with the proviso that the average particle diameter of the solids is < 2.0 µm.

2. Use according to Claim 1, **characterized in that** the average particle diameter is < 1.50 µm.

3. Use according to Claim 1 or 2, **characterized in that** 80% of the solids have a particle diameter of 0.01-5 µm and preferably 0.5-5 µm.

4. Use according to at least one of Claims 1 to 3, **characterized in that** the solids content is 65-75% by weight.

5. Use of the dispersion according to at least one of Claims 1 to 4, **characterized in that** it is used for rubber products.

6. Use of the dispersion according to at least one of Claims 1 to 5, **characterized in that** it is used for textile reinforcing plies.

7. Use according to Claim 6, **characterized in that** the reinforcing plies comprise polyester, polyethylene, polyamide or Ryan.

8. Use according to at least one of Claims 1 to 7, **characterized in that** the dispersion contains wetting agents and/or dispersants as additives.

## Revendications

1. Utilisation, en tant que promoteur d'adhérence pour le traitement de structures de renforcement destinées à la fabrication de produits polymères renforcés, d'une dispersion aqueuse contenant un isocyanate, à savoir un isocyanate partiellement ou totalement bloqué en tant que promoteur d'adhérence sous forme de matière solide, et des additifs,
la dispersion aqueuse présentant une part de matière solide de 55 à 85% en poids, dans la mesure où le diamètre moyen des particules de matière solide est inférieur à 2,0 µm.

2. Utilisation selon la revendication 1, **caractérisée en ce que** le diamètre moyen des particules est inférieur à 1, 50 µm.

3. Utilisation selon la revendication 1 ou 2, **caractérisée en ce que** 80% de la matière solide présente un diamètre moyen de particules de 0,01 à 5 µm, de préférence de 0,5 à 5 µm.

4. Utilisation selon au moins l'une des revendications 1 à 3, **caractérisée en ce que** la part de matière solide est de 65 à 75% en poids.

5. Utilisation de la dispersion selon au moins l'une des revendications 1 à 4, **caractérisée en ce qu'**elle est utilisée pour des produits caoutchouteux.

6. Utilisation de la dispersion selon au moins l'une des revendications 1 à 5, **caractérisée en ce qu'**elle est utilisée pour des structures de renforcement textiles.

7. Utilisation selon la revendication 6, **caractérisée en ce que** les structures de renforcement sont constituées de polyester, de polyéthylène, de polyamide ou de Ryan.

8. Utilisation selon au moins l'une des revendications 1 à 7, **caractérisée en ce que** la dispersion contient comme additifs des agents mouillants et/ou des agents dispersants.
